# EUROPEAN PATENT APPLICATION

(11) **EP 3 544 147 A1**
(43) Date of publication of application: **25.09.2019**
(21) Application number: 18162861.1
(22) Date of filing: 20.03.2018
(51) Int. Cl.: H02J 50/10, H02J 50/12, H02J 50/80

(54) **WIRELESS POWER TRANSFER SYSTEM**

(71) Applicant: Koninklijke Philips N.V., 5656 AE Eindhoven (NL)
(72) Inventor: Veltman, Eddy Gerrit, 5656 AE Eindhoven (NL); Heeringa, Schelte, 5656 AE Eindhoven (NL); Boomstra, Marko, 5656 AE Eindhoven (NL)
(74) Representative: de Haan, Poul Erik

(57) **Abstract**

A power receiver (105) for wirelessly receiving power from a power transmitter (101) via an electromagnetic power transfer signal comprises an input circuit (401) comprising a power receiver coil (107) arranged to extract power from the power transfer signal. A switchable load (411) is provided for resistively loading the input circuit (401). A controller (413) is arranged to switch the switchable load (411) between a power down mode in which the switchable load (411) is coupled to the input circuit (401) and a power transfer mode in which the switchable load (411) is decoupled from the input circuit (401) for at least part of the time. A controller (413) is arranged to switch the switchable load (411) from the power down mode to the power transfer mode in response to the detection of the presence of an electromagnetic signal from the power transmitter (101).

## Description

### FIELD OF THE INVENTION

The invention relates to operation of a wireless power transfer system, and in particular, but not exclusively, to detection of power receivers in a wireless power transfer system.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

Power transfer is in systems such as Qi typically initialized by the power transmitter detecting the presence of the power receiver and then proceeding to generate an electromagnetic signal starting the power transfer setup process.

All Qi compliant transmitters are required to implement at least one sensing method to detect the presence of a power receiver on its charging surface. The most common power receiver detection methods used in Qi transmitters are:
1. Detection of resonance frequency shift of the power transmitter output resonance circuit due to the metal and/or ferrite in a power receiver;
2. Detection of quality factor reduction of the power transmitter coil due to metal and/or ferrite in a power receiver.
3. Detection of the 1 MHz parallel resonance frequency that must be implemented in every Qi compliant power receiver.

However, whereas the different approaches may provide suitable functionality in many scenarios and applications, they are not ideal in all scenarios. In particular, the detection reliability and accuracy may not be ideal in all situations and may e.g. be reduced for some power receivers.

Hence, an improved operation for a power transfer system would be advantageous, and in particularly an improved detection of power receivers by power transmitters would be advantageous. In particular, an approach allowing increased flexibility, reduced cost, reduced complexity, improved detection possibility of a power receiver, increased efficiency, improved backwards compatibility, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power receiver for wirelessly receiving power from a power transmitter via an electromagnetic power transfer signal, the power receiver comprising: an input circuit comprising a power receiver coil arranged to extract power from the power transfer signal; a switchable load for resistively loading the input circuit; a controller for switching the switchable load between a power down mode in which the switchable load is coupled to the input circuit and a power transfer mode in which the switchable load is decoupled from the input circuit for at least part of the time; a detector for detecting a presence of an electromagnetic signal from the power transmitter; and wherein the controller is arranged to switch the switchable load from the power down mode to the power transfer mode in response to the detection of the presence of the electromagnetic signal.

The invention may provide improved performance in many wireless power transfer systems. It may in particular in many systems allow improved detection of power receivers by the power transmitter without unacceptably degrading other operations or properties, such as efficiency of the power transfer operation. It may in many embodiments extend the application of wireless power transfer to devices that would otherwise not be usable, such as specifically power receiving devices with low coupling factors and/or low amounts of metal. The approach may allow improved design freedom for power receiving devices. For example, it may allow curved surfaces proximal to power receiving coils (and indeed curved coils). The approach may for example allow shavers to be designed to have practical and functional shapes yet still be used with wireless power transfer systems such as Qi.

The power receiver/ switchable load may be in the power down mode when the power receiver is not powered by/from the power transmitter. The power receiver/ switchable load may be in the power transfer mode when the power receiver is not powered by/from the power transmitter. The power receiver may be arranged to operate in a power down mode and when the power receiver is in the power down mode the controller may control the switchable load to operate in the power down mode where the switchable load is coupled to the input circuit. The power receiver may be arranged to operate in a power transfer mode and when the power receiver is in the power transfer mode the controller may control the switchable load to operate in the power transfer mode where the switchable load is decoupled from the input circuit. The power receiver/ switchable load may in addition be arranged to operate in other modes at other times. The controller may in addition to the switchable load control (other elements of) the power receiver to operate in the power down mode and the power transfer mode.

The input circuit may in addition to the receive coil often comprise one or more capacitors forming a resonance circuit with the receive coil.

In accordance with an optional feature of the invention, the power receiver further comprises a modulator for load modulating the power transfer signal when in the power transfer mode, the modulator being arranged to load modulate the power transfer signal by coupling and decoupling the switchable load from the input circuit in response to data to be communicated.

The approach may allow for synergistic use of common circuitry to perform different functions. Many power receivers for wireless power transfer systems include a load modulation circuit which includes a capacitive load modulating the power transfer signal. The inventors have realized that by making this load resistive and appropriately controlling it, it is possible to improve detection performance for the power transmitter when trying to detect the presensce of a power receiver, and that this may indeed allow power receivers to be used with the wireless power transfer system that otherwise could not. The approach may allow improved detection performance without significantly increasing cost or complexity, and indeed often by reusing the same electronic components for different purposes.

In accordance with an optional feature of the invention, the controller is arranged to decouple the switchable load from the input circuit when in the power transfer mode except during load modulation by the modulator.

This may provide efficient and improved operation in many embodiments.

In accordance with an optional feature of the invention, the detector is arranged to detect the presence of the electromagnetic signal in response to a detection that a level of a signal induced in an inductor of the power receiver exceeds a threshold.

This may allow a low complexity yet reliable and efficient operation and control of when the switchable load should be coupled and decoupled from the input circuit.

In accordance with an optional feature of the invention, the detector is arranged to detect the presence of the electromagnetic signal in response to a detection that a level of a signal induced in an inductor of the power receiver exceeds a threshold for a duration exceeding a threshold.

This may allow a low complexity yet reliable and efficient operation and control of when the switchable load should be coupled and decoupled from the input circuit.

In accordance with an optional feature of the invention, the inductor is the power receiver coil.

This may allow a particularly efficient operation and reduce complexity and cost.

In accordance with an optional feature of the invention, the input circuit has a two terminal output providing an alternating current induced signal when current is induced in the power receiver coil; and the switchable load is connected to the two terminal output.

This may provide a particularly efficient operation and may typically substantially improve detection performance. The input circuit may be a one-port with a single two terminal output. The input circuit may have only two electrical connections providing extracted power to the rest of the power receiver when in the power transfer mode. The extracted power may correspond to an AC signal induced in the power receiver by the power transmitter. The output of the input circuit may be coupled to a rectifier for converting the AC signal into a DC signal and the switchable load may be coupled to the input circuit at a point between the input circuit and the rectifier.

In accordance with an optional feature of the invention, the power receiver further comprises a rectification circuit coupled to the two terminal output for rectifying the alternating current induced signal; and the switchable load is connected to at least one terminal of the two terminal output via the rectification circuit for at least part of a cycle of the alternating current induced signal.

This may provide a particularly efficient and high performance implementation.

In accordance with an optional feature of the invention, the switchable load comprises a first switch element for connecting a first terminal of the two terminal output port to a terminal of the rectification circuit for a control signal from the controller indicating that the switchable load should be coupled to the input circuit; and a second switch element for connecting a second terminal of the two terminal output port to the terminal of the rectification circuit for a control signal from the controller indicating that the switchable load should be coupled to the input circuit; and the rectification circuit is arranged to connect the terminal of the rectification circuit to the first terminal for at least part of a half period of the alternating current induced signal in which a voltage of the second terminal is higher than a voltage of the first terminal, and to connect the terminal of the rectification circuit to the second terminal for at least part of a half period of the alternating current induced signal in which a voltage of the second terminal is higher than a voltage of the first terminal.

This may provide a particularly efficient and high performance implementation. The rectification circuit may specifically be a rectifier bridge (typcially comprising four diodes/ rectifiers). The switch elements may typically be semiconductor switches such as Field Effect Transistors (FETs).

In accordance with an optional feature of the invention, the switchable load is arranged to be coupled to the input circuit in the absence of a control signal from the controller.

This may provide improved operation and/or facilitated implementation in many embodiments. An absence of a control signal may specifically occur when the connection providing the control signal is not driven, e.g. due to the driving circuit not being powered.

In accordance with an optional feature of the invention, the switchable load is arranged to be decoupled from the input circuit in the absence of a control signal from the controller.

This may provide improved operation and/or facilitated implementation in many embodiments. An absence of a control signal may specifically occur when the connection providing the control signal is not driven, e.g. due to the driving circuit not being powered.

In accordance with an optional feature of the invention, the input circuit comprises a resonance circuit comprising the receive coil and at least one capacitor.

This may improve performance in many embodiments, and may typically improve detection performance. It may allow for an increased effect of the switchable load with this effectively damping the resonance circuit when coupled to the input circuit.

In accordance with an optional feature of the invention, the controller is arranged to switch the switchable load from the power transfer mode to the power down mode in response to a termination of a power transfer.

This may provide an advantageous operation.

According to an aspect of the invention there is provided a method of operation for a power receiver for wirelessly receiving power from a power transmitter via an electromagnetic power transfer signal, the power receiver comprising: an input circuit comprising a power receiver coil arranged to extract power from the power transfer signal; a switchable load for resistively loading the input circuit; and the method comprising switching the switchable load between a power down mode in which the switchable load is coupled to the input circuit and a power transfer mode in which the switchable load is decoupled from the input circuit for at least part of the time; detecting a presence of an electromagnetic signal from the power transmitter; and wherein the switching of the switchable load comprises switching the switchable load from the power down mode to the power transfer mode in response to the detection of the presence of the electromagnetic signal.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of elements of a power transfer system in accordance with some embodiments of the invention;
FIG. 3 illustrates an example of elements of a power transmitter in accordance with some embodiments of the invention;
FIG. 4 illustrates an example of elements of a power receiver in accordance with some embodiments of the invention;
FIG. 5 illustrates an example of an operation of a power receiver in accordance with some embodiments of the invention;
FIG. 6 illustrates an example of an operation of a power receiver in accordance with some embodiments of the invention;
FIG. 7 illustrates an example of elements of a power receiver in accordance with some embodiments of the invention; and
FIG. 8 illustrates an example of elements of a power receiver in accordance with some embodiments of the invention.

### DETAILED DESCRIPTION OF THE EMBODIMENTS

The following description focuses on embodiments of the invention applicable to an electrical shaver which may be wirelessly charged utilizing a power transfer approach akin to that known from the Qi specification. However, it will be appreciated that the invention is not limited to this application but may be applied to many other wireless power transfer systems and devices.

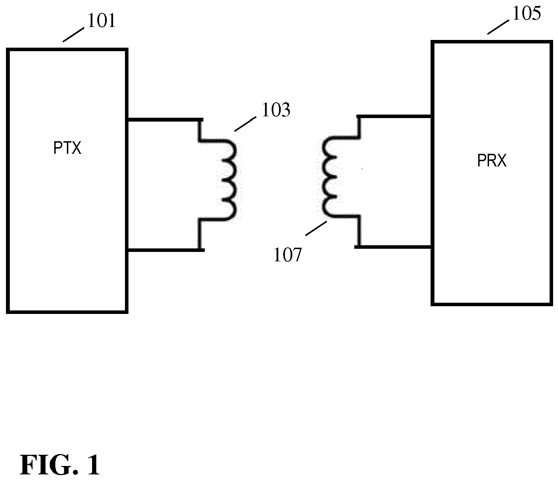

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may correspond to the electromagnetic power transfer component representing the energy transfer from the power transmitter to the power receiver, and may be considered to correspond to the component of the generated electromagnetic field that transfers power from the power transmitter to the power receiver. For example, if there is no loading of the receive coil 107, no power will be extracted by the power receiver from the generated electromagnetic field (apart from losses). In such a scenario, the driving of the transmitter coil 103 may generate an electromagnetic field of potentially high field strength but the power level of the power transfer signal will be zero (apart from losses). In some situations, where a foreign object is present, the power transfer signal may be considered to include a component corresponding to the power transfer to the foreign object, and thus the power transfer signal may be considered to correspond to the power being extracted from the electromagnetic field generated by the power transmitter.

The power transfer signal may typically have a frequency between around 20 kHz to around 500 kHz, and often for Qi compatible systems typically in the range from 95 kHz to 205 kHz (or e.g. for high power kitchen applications, the frequency may e.g. typically be in the range between 20kHz to 80kHz). The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the basic power profile), up to 15W for Qi specification version 1.2, in the range up to 100W for higher power applications such as power tools, laptops, drones, robots etc., and in excess of 100 W and up to more than 1000W for very high-power applications, such as e.g. kitchen applications.

In the following, the operation of the power transmitter 101 and the power receiver 105 will be described with specific reference to an embodiment generally in accordance with the Qi Specification (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1 or 1.2 (except for the herein described (or consequential) modifications and enhancements).

A Qi wireless power transfer system may operate in different modes or phases. In particular, in order to initiate a power transfer, a Qi system may proceed via different phases, in particular a selection phase, a ping phase, an identification and configuration phase, and a power transfer phase, as well as potentially some optional phases such as a negotiation phase and a calibration phase. More information may e.g. be found in chapter 5 of part 1 of the Qi wireless power specification.

Initially, the power transmitter 101 is in the selection phase wherein it merely monitors for the potential presence of a power receiver. As mentioned in the background, the power transmitter 101 may use a variety of methods for this purpose, e.g. as described in the Qi wireless power specification.

If a potential presence of a power receiver is detected, the power transmitter 101 may enter the ping phase wherein a power signal is temporarily generated. The power receiver 105 can apply the received signal to power up its electronics. After receiving the power signal, the power receiver 105 communicates an initial packet to the power transmitter 101. Specifically, a signal strength packet indicating the degree of coupling between power transmitter and power receiver is transmitted. More information can be found in chapter 6.3.1 of part 1 of the Qi wireless power specification. Thus, in the Ping phase it is determined whether a power receiver 105 is indeed present at the interface of the power transmitter 101.

Upon receiving the signal strength message, the power transmitter 101 moves into the Identification & Configuration phase. In this phase, the power receiver 105 keeps its output load disconnected and communicates to the power transmitter 101 using load modulation. The power transmitter 101 provides a power signal of constant amplitude, frequency and phase for this purpose (with the exception of the change caused by load-modulation). The messages are used by the power transmitter 101 to configure itself as requested by the power receiver 105. The messages from the power receiver 105 are not communicated continuously but are communicated in intervals.

Following the Identification and Configuration phase, the system may move on to the power transfer phase where the actual power transfer takes place. Specifically, after having communicated its power requirement, the power receiver 105 can connect the output load and supply it with the extracted power. The power receiver 105 monitors the output load and measures the control error between the actual value and the desired value of a certain operating point. It communicates such control errors to the power transmitter 101 at a minimum rate of e.g. every 250 ms to indicate these errors to the power transmitter 101 as well as the desire for a change, or no change, of the power signal. Thus, in the power transfer phase, the power receiver 105 also performs load modulation of the power signal in load modulation intervals in order to communicate information to the power transmitter 101. It will be appreciated that other communication approaches may alternatively or additionally be used.

Instead of progressing directly from the Identification and Configuration phase to the power transfer phase, the system may, when the power transmitter and power receiver both have the required capability, instead proceed to a Negotiation phase in which various operating parameters are determined by a communication interaction between the power receiver and the power transmitter, and a Calibration phase which may in particular calibrate a foreign object detection algorithm. If the Negotiation phase and the Calibration phase are successful, the system proceeds to the power transfer phase.

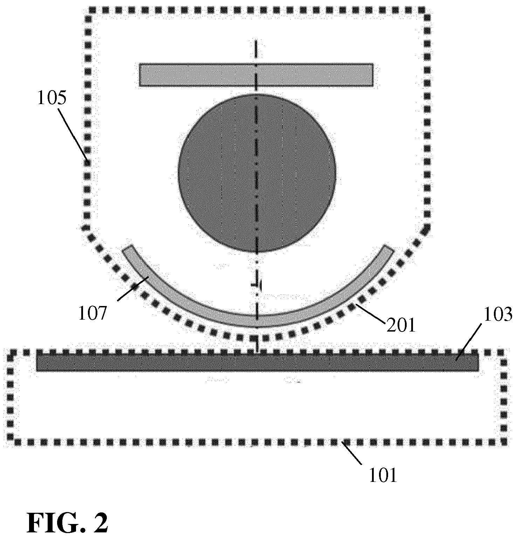

The following description will focus on the specific example where the power receiver is comprised in a shaver positioned on a power transmitter as shown in cross section in FIG. 2. The development of the Qi standard (and similar standards) has implicitly tended to assume that the devices involved have various properties, such as a flat area for coupling to the power transmitter etc. Typical Qi devices tend to be envisaged to correspond to smart phones, tablets or similar devices. However, the Inventors have realized that these (often implicit or even subconscious) assumptions of properties may have an effect on the operation of the power transfer system, and indeed impair performance, if they are not met.

For example, the shaver of FIG. 2 has a shape 201 which is not a made up of planar surfaces and indeed the power receiver coil 107 is positioned against a surface which is curved and accordingly the power receiver coil 107 also has a curved shape. The Inventors have realized that this may result in a substantially reduced coupling between the power transmitter coil 103 and the power receiver coil 107. This may be acceptable for the power transfer operation itself (it may however result in reduced efficiency) but may significantly affect other operations, such as specifically detection of the power receiver by the power transmitter during the selection phase.

Similarly, typical Qi devices, such as smartphones, tend to include a fair amount of metal which makes detection of the device easy as the impact on an electromagnetic field generated by the power transmitter is quite substantial. However, the Inventors have realized that some devices may not only have a very loosely coupled power receiver coil but may also contain very little metal. This may for example often be the case in shaver devices such as the one in FIG. 2.

Accordingly, the Inventors have had the insight that detection of some power receiving devices that do not have properties corresponding to typical (e.g. Qi) devices may be difficult to detect with sufficient accuracy by the power transmitter 101. Further, they have realized that if the detection of power receivers by a power transmitter could be improved, it would be possible to expand the range of useable devices to include devices that may not fully comply with the Qi specifications. For example, it may be possible to use Qi transmitters e.g. with power receiving devices that due to design constraints need to implement a coil geometry that does not allow the coupling factor specified by Qi to be met. Specifically, the Inventors have realized that if detection performance could be improved, it would be feasible to use a Qi transmitter with a power receiver device that does not have the required coupling factor, as the effect of the reduced coupling factor (e.g. on efficiency) during the power transfer phase is typically acceptable, especially for low power applications.

Qi compliant transmitters must include at least one sensing method to detect the presence of a power receiver on its charging surface during the selection phase. In the Qi specification the detection method used by power transmitters to detect power receivers is referred to as analog ping. During the Selection phase, the power transmitter will periodically generate a fairly low level electromagnetic signal/ field in short periodic time intervals. The power transmitter may then detect the presence of a power receiver by assessing the impact on the generated signal of any potential power receiver present.

The power transmitter may specifically use an approach detection at least one of the following:
1. A resonance frequency shift of the power transmitter due to the metal and/or ferrite in a power receiver.
2. Quality factor reduction of the power transmitter coil due to the metal and/or ferrite in a power receiver.
3. A 1 MHz parallel resonance frequency that is required to be designed in every Qi compliant power receiver.

The most commonly used methods 1 and 2 are based on detecting the impact of friendly metal/ ferrite in a power receiver on the generated analog ping signal. However, in case of devices that do not have sufficient amounts of metal and for which the coupling between the coils is low, the detection methods have been found to not be as accurate as required/ desired. In the following, a wireless power transfer system, and particularly a power receiver will be described which provides improved detection performance (while maintaining low complexity, high efficiency etc.).

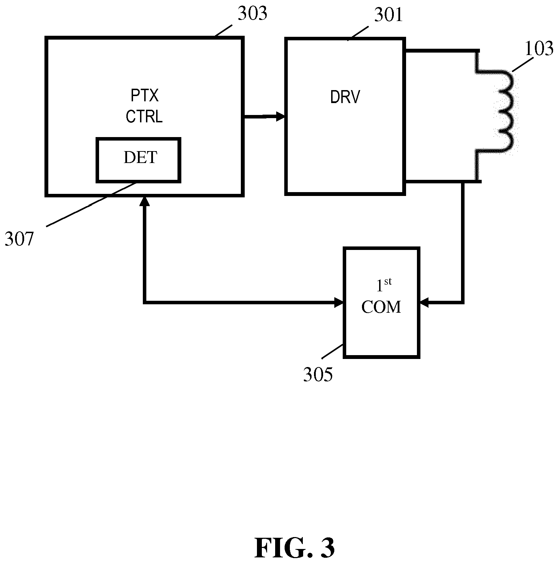

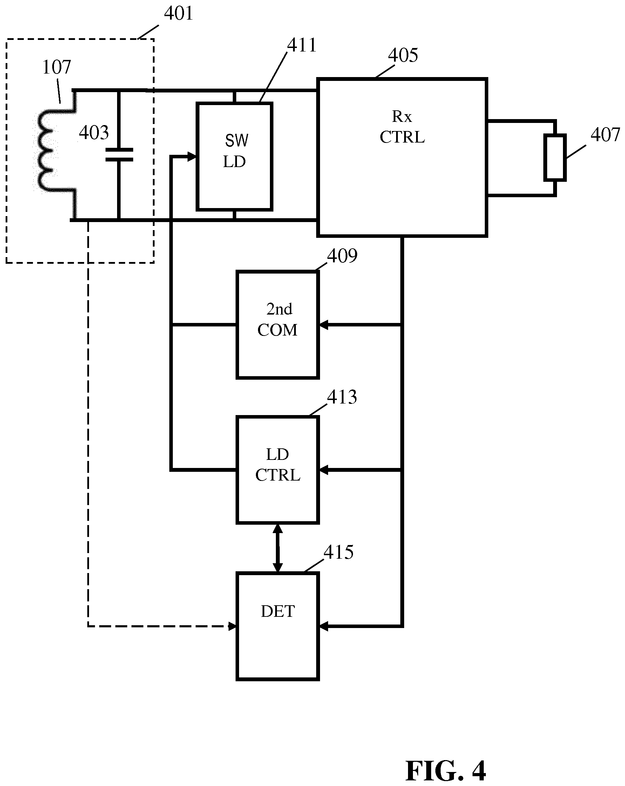

FIG. 3 illustrates elements of the power transmitter 101 and FIG. 4 illustrates elements of the power receiver 105 of FIG. 1 in more detail.

The power transmitter 101 includes a driver 301 which can generate a drive signal that is fed to the transmitter coil 103 which in return generates the electromagnetic field and thus the power transfer signal, which can provide a power transfer to the power receiver 105. The power transfer signal is provided (at least) during the power transfer phase.

The driver 301 may typically comprise an output circuit in the form of an inverter, typically formed by driving a full or half bridge as will be well known to the skilled person.

FIG. 3 illustrates the output of the power transmitter 101 as a single transmitter coil 103 but it will be appreciated that the output circuit of a power transmitter will often comprise a resonance circuit as known to the skilled person. Thus the driver 301 may be considered to include one or more output capacitors forming a resonance circuit with the transmitter coil 103.

The power transmitter 101 further comprises a power transmitter controller 303 which is arranged to control the operation of the power transmitter 101 in accordance with the desired operating principles. Specifically, the power transmitter 101 may include many of the functionalities required to perform power control in accordance with the Qi Specifications.

The power transmitter controller 303 is in particular arranged to control the generation of the drive signal by the driver 301, and it can specifically control the power level of the drive signal, and accordingly the level of the generated power transfer signal. The power transmitter controller 303 comprises a power loop controller controlling a power level of the power transfer signal in response to the power control messages received from the power receiver 105 during the power control phase.

In order to receive data and messages from the power receiver 105, the power transmitter 101 comprises a first communicator 305 which is arranged to receive data and messages from the power receiver 105 (as will be appreciated by the skilled person, a data message may provide one or more bits of information). In the example, the power receiver 105 is arranged to load modulate the power transfer signal generated by the transmitter coil 103, and the first communicator 305 is arranged to sense variations in the voltage and/or current of the transmitter coil 103 and to demodulate the load modulation based on these. The skilled person will be aware of the principles of load modulation, as e.g. used in Qi wireless power transfer systems, and therefore these will not be described in further detail.

In many embodiments, the first communicator 305 is further arranged to transmit data to the power receiver 105, and it may specifically be arranged to modulate the power transfer signal using frequency, amplitude, or phase modulation. This may for example be used during the Negotiation phase when operating parameters are determined by a negotiation process involving bidirectional communication between the power receiver and the power transmitter.

In some embodiments, communication may be performed using a separate communication channel which may be achieved using a separate communication coil, or indeed using the transmitter coil 103. For example, in some embodiments Near Field Communication may be implemented or a high frequency carrier (e.g. with a carrier frequency of 13.56 MHz) may be overlaid on the power transfer signal.

The power transmitter controller 303 is arranged to control the power transmitter to initialize power transfer operations by going through the different phases as previously described. Specifically, during the Selection phase, the power transmitter controller 303 controls the driver 301 to periodically generate short and relatively low-level drive signals and consequential electromagnetic detections signals/ fields. These short signal bursts are known as analog pings.

The power transmitter controller 303 comprises a detector 307 which is arranged to detect a presence of a power receiver by detecting the impact of the power receiver on the generated analog ping. The detector 307 may specifically determine the quality factor of the output resonance circuit to determine if this is changed due to the presence of another device. The quality factor may be determined from the properties of the current and/or voltage of the drive signal, such as by measuring the overall power of the driver signal and/or the phase difference between the current and voltage.

As a specific example, the power transmitter may drive the resonant circuit for a short period during an analog ping. After this period the current in the resonant circuit keeps resonating at the circuits resonance frequency until it damps away. The power transmitter can measure the rate of decay during this free resonating phase. The decay is usually measured by following the peak values of either the coil voltage or current. If the decay is faster than expected for no object being present, the power transmitter may consider that a potential presence of a power receiver is detected.

If the detector 307 detects the potential presence of a power receiver, the power transmitter proceeds to the ping phase in which longer and sometimes stronger signals are generated by the power transmitter 101 allowing the power receiver 105 to respond by load modulation. These signals are known as digital pings.

However, as previously mentioned, the detection performance may be less accurate than desired for some specific power receiving devices, such as devices with low coupling and/or comprising only very small amounts of conductive material/ metal.

The power receiver 105 is arranged to improve detection while at the same time providing efficient, low complexity operation and implementation.

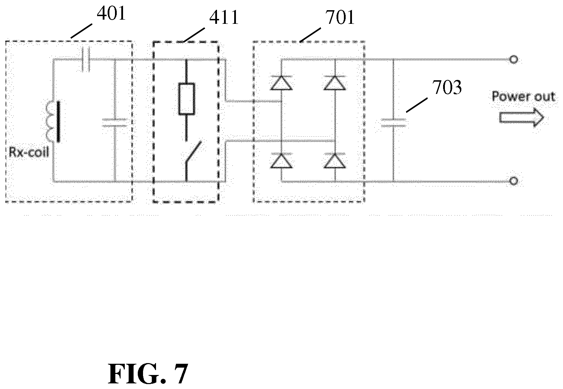

As illustrated in FIG. 4, the power receiver 105 comprises an input circuit 401 which is arranged to extract power from the power transfer signal. The input circuit 401 specifically includes the receive coil 107 in which the electromagnetic field generated by the power transmitter 101 will induce a current. In the example, the receive coil 107 is part of a resonance circuit and the input circuit 401 specifically comprises a capacitor 403 forming a parallel resonance circuit with the power receiver coil 107. It will be appreciated that in other embodiments, other configurations may be used, e.g. a series resonance may be implemented and/or more than one capacitor or inductor may be included. In particular, for Qi power receivers, the input circuit 401 will typically comprise both a series capacitor and a parallel capacitor (as illustrated in FIG. 7) where the parallel capacitor is used to provide a resonance at 1 MHz for detection and the series capacitor is arranged to provide resonance around the frequency of the power transfer signal.

The input circuit 401 is coupled to a power receiver controller 405 which couples the receiver coil 107 to a load 407. The power receiver controller 405 includes a power control path which converts the power extracted by the receiver coil 107 into a suitable supply for the load 407. The power control path may include a rectifier, voltage control, current control etc. as will be known in the art.

In addition, the power receiver controller 405 may include various power receiver controller functionality required to perform power transfer, and in particular functions required to perform power transfer in accordance with the Qi specifications.

In order to support communication from the power receiver 105 to the power transmitter 101 (and in many embodiments also from the power transmitter to the power receiver), the power receiver 105 comprises a second communicator 409.

The second communicator 409 is arranged to transmit data to the power transmitter by varying the loading of the receiver coil 107 in response to data to be transmitted to the power transmitter 101. The load variations are then detected and demodulated by the power transmitter 101 as will be known to the person skilled in the art.

In the example, the second communicator 409 is furthermore arranged to demodulate amplitude, frequency, and/or phase modulation of the power transfer signal in order to retrieve data transmitted from the power transmitter 101.

The power receiver 105 further comprises a switchable load 411 which is arranged to provide a resistive loading of the input circuit 401, and specifically of the receive coil 107, when it is coupled to the input circuit 401. The switchable load 411 may provide a resistive loading of the resonance circuit of the input circuit 401 thereby damping this.

The switchable load 411 may in some embodiments simply be implemented by a resistor and a switchable element such as a relay, bipolar transistor, Field Effect Transistor (FET) etc. In some embodiments, the switchable load 411 may include reactive components, and may provide a complex impedance loading when coupled to the input circuit 401. However, the complex impedance will have a resistive component and thus a non-zero real value. Indeed, in some embodiments, the switchable load 411 may even include active or semiconductor components as part of the load when coupled to the input circuit 401 (and in addition to the switch element). However, the switchable load 411 will provide a resistive load component for at least part of the cycle such that the overall effect will dissipate real power and dampen the input circuit 401 and the resonance circuit thereof.

In the example, the switchable load 411 is directly connected over the output of the input circuit 401. Specifically, the input circuit 401 may be a port with two terminals providing the extracted/ induced signal and the switchable load 411 may be connected directly to the two terminals. Thus, when the switchable load 411 is coupled to the input circuit 401, and specifically the receive coil 107, the induced/ extracted/ provided signal will be fed to the load of the switchable load 411 and thus to the resistive element of this load. Accordingly, the signal provided by the input circuit 401 will result in real power being dissipated in the switchable load 411 when this is coupled to the input circuit 401.

In some embodiments, the switchable load 411 may be coupled directly over the receive coil 107 and thus may effectively provide at least a partial parallel resistor to the receive coil 107. It will also be appreciated that the switchable load 411 need not provide a parallel resistive loading but may in some embodiments additionally or alternatively be implemented as a series load. For example, a resistor with a parallel switch element (e.g. a relay) may be coupled in series with the receive coil 107.

The switchable load 411 may specifically be implemented such that current induced in the receive coil 107 will flow through the resistive component of the switchable load 411 when this is coupled to the receive coil 107 (for at least some of the time, e.g. part of a cycle of the induced signal).

The power receiver 105 further comprises a load controller 413 which is arranged to control the switchable load 411, and specifically to couple and decouple the switchable load 411 from the input circuit 401. When the switchable load 411 is coupled to the input circuit 401 at least some of the induced current will flow through the resistive component of the switchable load 411. Thus, when the switchable load 411 is coupled to the input circuit 401, the switchable load 411 will dampen (or increase the damping) of (a resonance circuit of) the input circuit 401. When the switchable load 411 is decoupled from the input circuit 401 none of the induced current will flow through the resistive component of the switchable load 411. Thus, when the switchable load 411 is decoupled from the input circuit 401, the switchable load 411 will not dampen (or increase the damping) of (a resonance circuit of) the input circuit 401.

It will be appreciated that there may be loading (including resistive loading) of the input circuit 401 which is not switched by the load controller 413. However, such loading may not be considered part of the switchable load 411. For example, a permanent resistor (or a power consuming circuit) may continuously be coupled between the terminals of the input circuit 401 but may not be switched by the load controller 413, and it is accordingly not part of the switchable load 411 (as another example, if the load controller 413 switches between two resistors, the switchable load 411 corresponds to the difference in the resistance and not to the resistor values themselves).

The power receiver may operate in different modes. One mode may be a power down mode in which no power transfer is ongoing. The power down mode may be a standby mode and may specifically be a mode corresponding to there being no power transmitter present, and specifically for a Qi system, the power receiver may be in the power down mode when in the selection phase. The power receiver may typically be in the power down mode when no presence of a power transmitter has been detected, no power is extracted, no power transfer signal is present, the load of the power receiver is not connected, the power receiver does not provide any power to the load, and/or the power extracted by the power receiver is lower than a given threshold of, say, 10mW, 100mW, 500mW, 1W.

Another mode is a power transfer mode in which power is extracted from the power transfer signal. The power transfer mode may specifically be a mode corresponding to there being a power transmitter present and providing a signal for power transfer, and specifically for a Qi system, the power receiver may be in the power transfer mode when in the power transfer phase. The power receiver may also in typical embodiments be considered to operate in the power transfer mode during the identification and configuration phase, the negotiation phase and the calibration phase. The power receiver may typically be in the power transfer mode when power is extracted from the power transfer signal, when there is a power transfer signal present, the load of the power receiver is connected, and/or the power receiver provides power to the load.

The load controller 413 is coupled to the switchable load 411 and is specifically arranged to generate a control signal that controls the switch status of the switchable load 411 and thereby controls whether the switchable load 411 is coupled to the input circuit 401 and receive coil 107 or is decoupled from this.

The load controller 413 is arranged to switch the switchable load 411 such that it is coupled to the input circuit 401 when the power receiver 105 is in the power down mode and is decoupled from the input circuit 401 for at least part of the time when the power receiver 105 is in the power transfer mode. Specifically, as will be described in more detail later, the switchable load 411 may also be used for load modulation during power transfer, and in many embodiments the switchable load 411 will be decoupled from the input circuit 401 when in the power transfer mode except when used for load modulation, i.e. except during load modulation time intervals.

The power receiver 105 further comprises a detector 415 which is arranged to detect/ estimate if an electromagnetic signal is being generated by the power transmitter. The detection that an electromagnetic signal is being generated by the power transmitter may be determined in response to the signal/current induced in the receive coil 107 meeting a suitable criterion, such as e.g. the level of the induced current exceeding a threshold.

The detector 415 is coupled to the load controller 413 which is arranged to switch the switchable load from the power down mode to the power transfer mode in response to a detection of an electromagnetic signal from the power transmitter. Thus, if the power receiver 105, and specifically the switchable load 411, are in the power down mode of operation in which the switchable load 411 is coupled to the input circuit 401 and the detector 415 detects the presence of an electromagnetic signal, the load controller 413 will switch the switchable load 411 into the power transfer mode and will typically decouple the switchable load 411 from the input circuit 401 (except for potentially during load modulation).

The load controller 413 is further arranged to switch the switchable load 411 from the power transfer mode to the power down mode, i.e. to switch the switchable load 411 from being decoupled from the input circuit 401 to being coupled to the input circuit 401. The switch to the power down mode may specifically be in response to a termination of a power transfer. For example, when the power receiver controller 405 determines that a power transfer is terminated, either orderly by e.g. suitable communication or disorderly by the power transfer signal simply disappearing (e.g. due to the power receiver being removed from the power transmitter), it may send a control signal to the load controller 413 which may in response proceed to switch a switch element of the switchable load 411 in order to couple it to the input circuit 401.

Thus, when the power receiver is in the power down mode, the load controller 413 also switches the switchable load 411 to be in a power down mode in which it is coupled to the input circuit 401. When the power receiver is in the power transfer mode, the load controller 413 also switches the switchable load 411 to be in a power transfer mode in which it is decoupled from the input circuit 401 unless it is used for load modulation.

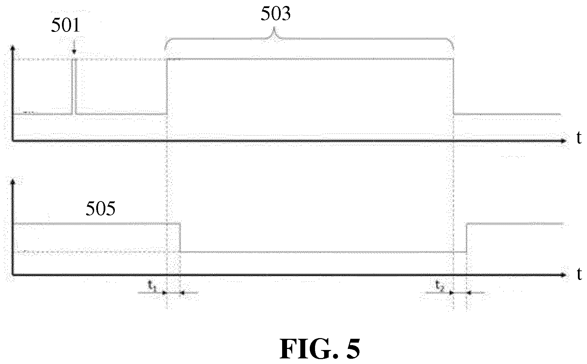

An example of the approach is illustrated in FIG. 5, which (simplified) shows the electromagnetic signal generated by the power transmitter during an initialization, performance, and termination of a power transfer operation. The power transmitter in the example generates an initial ping 501 (short burst of electromagnetic signal) which initiates a power transfer operation which is characterized by a power transfer phase in which an electromagnetic signal/ power transfer signal 503 is generated for the power transfer.

In this scenario, the load controller 413 may generate a switch signal 505 which initially causes the switchable load 411 to be coupled to the input circuit 401. This allows the power transmitter to detect the presence of the power receiver by evaluating the impact on the ping signal 501. The ping signal 501 is in the example not sufficient to cause a detection at the power receiver and accordingly the switchable load 411 remains in the power down mode following the ping signal. However, when the power transfer signal 503 is subsequently generated during the power transfer phase, this is detected by the detector 415 after a time t₁ and this results in the switchable load 411 being switched to the power transfer mode in which it is decoupled from the input circuit 401. Following the termination of the power transfer, in the example a duration of t₂ after the termination of the power transfer signal, the load controller 413 switches the switchable load 411 back to the power down mode and couples the switchable load 411 to the input circuit 401.

The approach thus provides for a power receiver in which the input circuit 401 is resistively loaded during power down operation but with this resistive load being removed during power transfer operation.

This approach may result in improved performance in many systems. In particular, it may improve the detection performance for the power transmitter while at the same time providing typically negligible impact on the efficiency etc. of the power transfer operation. The input circuit 401 may when resistively loaded specifically have an effect on the analog ping signal (or similar detection signal) generated by the power transmitter which corresponds to that which would be experienced from a power receiving device comprising significant amount of metal. Specifically, the quality factor of the power transmitter resonance circuit will be reduced, and this can be detected by the power transmitter.

The approach may accordingly improve detection of the power receiver by the power transmitter and may accordingly enable power transfer phase initialization in situations that would otherwise not allow it. The approach may accordingly allow a power transfer initialization approach such as that of Qi to be used with power receivers that do not fully meet the strict Qi requirements in terms of coil coupling and friendly metal. The approach may for example enable standard Qi transmitters to be used with shavers such as that of FIG. 2 which do not comprise metal (or which comprise metal which is not sufficiently coupled to the power transmitter when in use) and which have geometries that do not allow a close coupling between the power transmitter coil 103 and the receive coil 107. The approach may accordingly provide a substantially increased design freedom when designing new devices for wireless power transfer systems.

It will be appreciated that the detector 415 may use different techniques for detecting the presence of the electromagnetic signal from the power transmitter in different embodiments. The electromagnetic signal from the power transmitter may be one originating from or generated by the power transmitter (such as a ping or a power transfer signal), and in some embodiments the detector 415 may be arranged to differentiate between a magnetic field from the power transmitter and other magnetic fields. This may be achieved by considering a characteristic of the generated signal/ field, such as e.g. a frequency or a modulation of the signal. In many embodiments, the detector 415 may not perform such differentiation but may e.g. simply measure a signal/ field strength, e.g. by measuring the level of the current or voltage induced in the receive coil 107.

Specifically, in many embodiments, the detector 415 may be arranged to detect the presence of the electromagnetic signal by detecting that of a level of a signal induced in an inductor of the power receiver exceeds a threshold. The inductor may be a dedicated detection or measurement coil but will typically be the receive coil 107. Thus, in some embodiments, the detector 415 may monitor the level of the current or voltage induced in the receive coil 107 and if this exceeds a given threshold level, then the detector 415 will consider that the presence of an electromagnetic signal from the power transmitter has been detected.

In many embodiments, the detector 415 may be arranged to detect the presence of the electromagnetic signal in response to a detection that the level of a signal induced in the inductor of the power receiver exceeds a signal level threshold for a duration exceeding a duration threshold. Thus, in such embodiments, it is not sufficient that an induced signal level exceeds a threshold, but it is further required that it does so for a required minimum of time.

This may provide improved performance in many embodiments, and in particular may allow the system to be designed such that the switchable load 411 is not decoupled from the input circuit 401 during the early detection phases, specifically the Selection phase, but only during the later power initialization phases, such as e.g. during the Ping phase. For example, for a Qi power transfer system, the duration threshold may be set such that analog pings will not trigger a detection, but digital pings will.

The duration of this delay t₁ may thus be designed to exceed the duration of the analog ping but not the digital ping. The minimum length of t₁ may be set to the minimum duration of one period of the magnetic field signal. The Qi standard specifies a frequency of 175 kHz during the analog and digital ping. This gives a minimum value for t₁ of 5.7 µs. In practice the analog ping length of Qi transmitters is more than one signal period, however, so the value will typically be selected substantially higher. At the same time, the duration should be sufficiently short to not unacceptably affect the operation during the power transfer detrimentally. From an efficiency point of view, it is desirable to make the duration as short as possible. Further, in systems such as Qi, load modulation is used, and this may occur 65 ms into a power transfer at the latest.

Accordingly, the duration threshold should typically preferably be selected within the interval of 5.7 µs < t₁ < 65 ms. In most embodiments, such as Qi, particularly efficient performance is achieved for a duration threshold between 1ms and 10 ms.

The duration from a termination of the power transfer phase, and specifically from the time the power transfer signal is removed, to the switchable load 411 is coupled to the input circuit 401, i.e. t₂, is typically made as short as possible in order to ensure that the power receiver will be ready for detection by an analog ping. Typically, the value of t₂, is implemented to be no more than 10ms and often it is in the region of 1ms.

In many embodiments, the switchable load 411 may be a load that is used for load modulation of the power transfer signal. Thus, specifically the second communicator 409 may be arranged to load modulate the power transfer signal by coupling and decoupling the switchable load from the input circuit in response to data to be communicated.

For example, when communicating a binary value of "I", the second communicator 409 may couple the switchable load 411 to the input circuit 401, when communicating a binary value of "0", the second communicator 409 may decouple the switchable load 411 from the input circuit 401. In this way, the loading of the power transfer signal may be varied and thus can be detected by the power transmitter. It will be appreciated that typically a more complex modulation scheme is used, e.g. Qi uses a differential bi-phase encoding scheme to modulate data bits onto the power transfer signal.

Thus, effectively, the power receiver may reuse a resistive modulation load to also improve detection of the power receiver. An improved detection may thus be achieved without substantially increasing cost or adding complexity.

The power receiver may in particular use an advanced and multi-function control together with circuitry specifically implemented to be suitable for different functions. In particular, instead of using a capacitive modulation load and/or a modulation load after rectification of the induced signal, the system may implement a switchable load 411 that directly applies a resistive load to the input circuit 401. This resistive load can then be controlled such that it can provide both load modulation and effectively increase detection reliability.

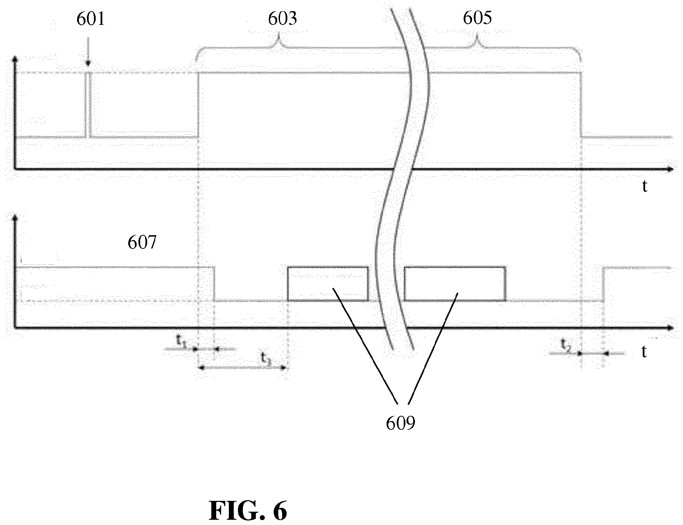

FIG. 6 illustrates an example of how such an operation may be performed. The approach corresponds to that shown in FIG. 5 except that both an analog ping 601, a digital ping 603, and a power transfer phase 605 is shown. Further, during the digital ping and the power transfer phase, the switch signal 607 is also controlled and varied in response to data thereby introducing load modulation that can be detected by the power transmitter. Thus, the ping and power transfer phases also include communication intervals 609 in which data packets may be transmitted. In the example, the switchable load 411 is accordingly during the power transfer phase and the digital ping phase decoupled from the input circuit 401 except during communication intervals in which load modulation is performed, and during which the switchable load 411 is switched in accordance with data to be transmitted to the power transmitter.

In the examples illustrated above, the input circuit 401 is specifically a port with a two-terminal output that provides an alternating current induced signal when current is induced in the power receiver coil. In the examples, the switchable load is connected to the two terminal (output) port.

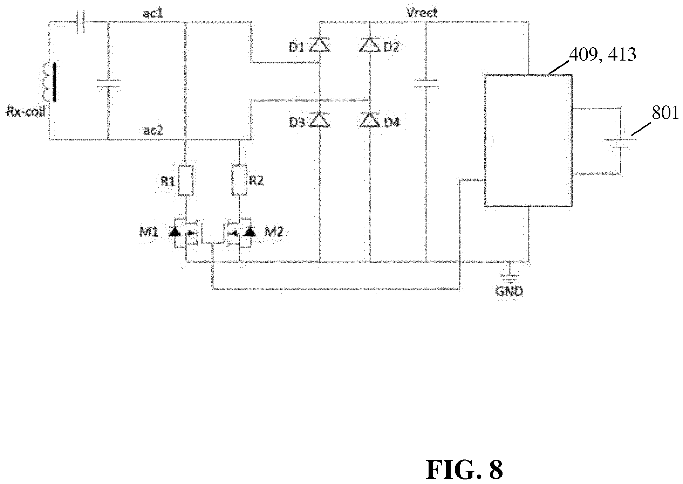

A possible implementation of such an approach is illustrated in FIG.7, and with a specific example of an implementation and control of the switchable load 411 in FIG. 8.

In the example, the switchable load 411 is coupled to the two-terminal output of the input circuit 401 which is further coupled to a rectifier circuit 701 with a smoothing capacitor 703 coupled to the output of the rectifier bridge forming the rectifier circuit 701. Thus, a DC voltage is generated over the capacitor 703. The magnitude of the ripple on the DC voltage will depend on the size of the smoothing capacitor as well as on the load.

Referring to FIG8, the resistive component of the switchable load 411 is in the specific example formed by R1 and R2. The switch is formed by the MOSFET's M1 and M2. The combination R1-M1 forms a switchable load when the voltage on ac1 is higher than the voltage on ac2. Likewise, the combination R2-M2 forms a switchable load when the voltage on ac2 is higher than the voltage on ac1. R1-M1 is "off' when the voltage on ac1 is negative. R2-M2 is "off' when the voltage on ac2 is negative.

In the example, the resistive load of R1 and R2 is thus connected/ coupled to one of the terminals of the input circuit 401 via respectively M1 or M2 with the connection to the other terminal being performed through one of the rectifiers of the rectifier bridge, namely D4 and D3 respectively.

In the example, a path from ac1 to ac2 is formed via R1, M1, D4 when the voltage of ac1 is higher than ac2. Similarly, a path is formed from ac2 to ac1 via R2, M2, D3 when the voltage of ac2 is higher than ac1. Thus, the paths used to couple a resistive component to the input circuit 401 alters for the two half periods of the induced AC signal.

It should be noted that without additional precautions/ circuitry, the "off' state during a negative ac voltage is only possible when the forward voltage of D3 and D4 is lower than the forward voltage of the body diodes in M1 and M2. Otherwise the body diodes would start conducting when the corresponding ac voltage is negative. This constraint on the forward voltage of D3 and D4 can very easily be met because a full bridge rectifier is usually made with Schottky diodes. Schottky diodes in general have a lower forward voltage than body diodes in MOSFET's. Also, it is very common to use synchronous rectification. In that case the diodes D1, D2, D3 and D4 are replaced by MOSFET's and the voltage over the component D3 and D4 when "on" will be even lower than that of a Schottky diode.

In the example, during the communication intervals of the power transfer phase, the MOSFET's M1 and M2 are switched on and off in response to the data to be load modulated onto the power transfer signal.

During the power down mode of operation, the controller 409, 413 keeps the digital communication signal "high" when the power receiver does not detect the presence of a power transmitter. In this way the resistors R1 and R2 form a load on the resonant circuit when the system is idle, i.e. when in the power down mode.

During the power down mode, the battery 801 (which is also often the load when the power receiver is for battery charging) powers the controller 409, 413 when the system is not being powered by a power transmitter. The implementation shown in FIG. 8 is based on the battery 801 keeping the controller 409, 413 operational and sufficient to overcome the threshold voltage of M1 and M2. In the example, the MOSFETs M1 and M2 are selected to be MOSFETs that are normally off for no gate voltage, i.e. the threshold voltage is above zero. Accordingly, the controller 409, 413 is arranged to generate a suitable gate drive signal for the MOSFETs in order to switch these on during the power down mode, and thus in order to load the input circuit 401 and the receive coil 107.

In the example, the switchable load 411 is accordingly arranged to be decoupled from the input circuit in the absence of a control signal from the controller 409, 413 and the controller 409, 413 proceeds to generate a drive signal during the power down mode which ensures that the switchable load 411 is indeed coupled to the input circuit 401. This may allow use of commonly available enhancement mode MOSFETs.

This approach may be very suitable for power receiving devices that include a battery. However, in other embodiments, and in particular embodiments for which the power receiver does not include a battery, a switchable load 411 may be used which has a natural state in which the resistive load is coupled to the input circuit 401. In this case, the controller will accordingly need to actively drive the switchable load 411 to decouple from the input circuit 401, and it will automatically load the input circuit 401 when no power is available. This may for example be achieved in the system of FIG. 8 by selecting MOSFETS M1 and M2 that are on for an absence of a gate signal. Thus, in this example, the switchable load is arranged to be coupled to the input circuit in the absence of a control signal from the controller 409, 413. Such an approach may e.g. be particularly suitable for implementations that do not include a battery with the power receiver.

Fig. 8 specifically shows the use of two identical enhancement mode N-channel MOSFET's. An advantage of using MOSFETS is that it costs no current or energy to keep it either in "on" or "off' state. Only switching between the states costs a little bit of energy. Furthermore, they can be directly coupled to an output port of a microprocessor.

Enhancement mode MOSFET's are "normally-off'. These are the most commonly used types. There are also depletion mode MOSFETS available which are "normally on". These could be used in applications without a battery at the receiver side. Then the switchable load is automatically coupled to the input circuit when there is no power from the transmitter.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A power receiver for wirelessly receiving power from a power transmitter (101) via an electromagnetic power transfer signal, the power receiver (105) comprising:
an input circuit (401) comprising a power receiver coil (107) arranged to extract power from the power transfer signal;
a switchable load (411) for resistively loading the input circuit (401);
a controller (413) for switching the switchable load (411) between a power down mode in which the switchable load (411) is coupled to the input circuit (401) and a power transfer mode in which the switchable load (411) is decoupled from the input circuit (401) for at least part of the time;
a detector (415) for detecting a presence of an electromagnetic signal from the power transmitter (101); and
wherein the controller (413) is arranged to switch the switchable load (411) from the power down mode to the power transfer mode in response to the detection of the presence of the electromagnetic signal.

2. The power receiver of claim 1 further comprising a modulator (409) for load modulating the power transfer signal when in the power transfer mode, the modulator (409) being arranged to load modulate the power transfer signal by coupling and decoupling the switchable load (411) from the input circuit in response to data to be communicated.

3. The power receiver of claim 2 wherein the controller (413) is arranged to decouple the switchable load (411) from the input circuit when in the power transfer mode except during load modulation by the modulator (409).

4. The power receiver of any previous claim wherein the detector (415) is arranged to detect the presence of the electromagnetic signal in response to a detection that a level of a signal induced in an inductor of the power receiver exceeds a threshold.

5. The power receiver of any previous claim wherein the detector (415) is arranged to detect the presence of the electromagnetic signal in response to a detection that a level of a signal induced in an inductor of the power receiver (105) exceeds a threshold for a duration exceeding a threshold.

6. The power receiver of claim 4 or 5 wherein the inductor is the power receiver coil (107).

7. The power receiver of any previous claim wherein the input circuit (401) has a two terminal output providing an alternating current induced signal when current is induced in the power receiver coil (107); and the switchable load (411) is connected to the two terminal output.

8. The power receiver of claim 7 further comprising a rectification circuit (701) coupled to the two terminal output for rectifying the alternating current induced signal; and the switchable load (411) is connected to at least one terminal of the two terminal output via the rectification circuit (701) for at least part of a cycle of the alternating current induced signal.

9. The power receiver of claim 8 wherein the switchable load (411) comprises a first switch element for connecting a first terminal of the two terminal output port to a terminal of the rectification circuit for a control signal from the controller (413) indicating that the switchable load (411) should be coupled to the input circuit; and a second switch element for connecting a second terminal of the two terminal output port to the terminal of the rectification circuit for a control signal from the controller (413) indicating that the switchable load (411) should be coupled to the input circuit (401); and the rectification circuit (701) is arranged to connect the terminal of the rectification circuit (701) to the first terminal for at least part of a half period of the alternating current induced signal in which a voltage of the second terminal is higher than a voltage of the first terminal, and to connect the terminal of the rectification circuit (701) to the second terminal for at least part of a half period of the alternating current induced signal in which a voltage of the second terminal is higher than a voltage of the first terminal.

10. The power receiver of any previous claim wherein the switchable load (411) is arranged to be coupled to the input circuit in the absence of a control signal from the controller (413).

11. The power receiver of any previous claim wherein the switchable load (411) is arranged to be decoupled from the input circuit (401) in the absence of a control signal from the controller (413).

12. The power receiver of any previous claim wherein the input circuit (401) comprises a resonance circuit comprising the receive coil (107) and at least one capacitor.

13. The power receiver of any previous claim wherein the controller (413) is arranged to switch the switchable load (411) from the power transfer mode to the power down mode in response to a termination of a power transfer.

14. An electrical shaver comprising a power receiver in accordance with any of the previous claims.

15. A method of operation for a power receiver for wirelessly receiving power from a power transmitter (101) via an electromagnetic power transfer signal, the power receiver (105) comprising:
an input circuit (401) comprising a power receiver coil (107) arranged to extract power from the power transfer signal;
a switchable load (411) for resistively loading the input circuit (401);
and the method comprising
switching the switchable load (411) between a power down mode in which the switchable load (411) is coupled to the input circuit (401) and a power transfer mode in which the switchable load (411) is decoupled from the input circuit (401) for at least part of the time;
detecting a presence of an electromagnetic signal from the power transmitter (101); and
wherein the switching of the switchable load (411) comprises switching the switchable load (411) from the power down mode to the power transfer mode in response to the detection of the presence of the electromagnetic signal.
